# EUROPÄISCHE PATENTANMELDUNG

(11) **EP 1 104 154 A1**
(43) Veröffentlichungstag der Anmeldung: **30.05.2001**
(21) Anmeldenummer: 99123585.4
(22) Anmeldetag: 26.11.1999
(51) Int. Cl.: H04M 1/725

(54) **Mobiltelefon und Verfahren zur Wiedergabe von Audiodaten**

(71) Anmelder: Kaufmann, Stephan, 86161 Augsburg (DE)
(72) Erfinder: Kaufmann, Stephan, 86161 Augsburg (DE); Kaufmann, Oliver, 86161 Augsburg (DE)
(74) Vertreter: Dendorfer, Claus, Dr.

(57) **Zusammenfassung**

Ein Mobiltelefon (10) ist mit einem Dekoder (36) ausgestattet. Der Dekoder (36) dient zur Wiedergabe von Audiodaten, die in einem komprimierten digitalen Audio-format, das sich von dem/den beim Telefoniebetrieb des Mobiltelefons verwendeten Audioformat/en unterscheidet, gespeichert sind. Durch die Erfindung wird ein weiteres Anwendungsfeld für Mobiltelefone erschlossen.

## Beschreibung

Die Erfindung betrifft den Bereich der mobilen Kommunikations- und Unterhaltungsgeräte. Insbesondere betrifft die Erfindung den Bereich mobiler Telefone, die im deutschen Sprachraum auch als "Handies" bezeichnet werden.

Mobile Telefone sind in den unterschiedlichsten Ausgestaltungen gut bekannt. Sie sind zur Kommunikation über ein Mobilfunknetz gemäß einem oder mehreren Telefoniestandard/s eingerichtet. Dazu weisen Mobiltelefone eine komplexe digitale Schaltung sowie Baugruppen wie eine Stromversorgungseinrichtung, eine Anzeige, eine Tastatur, einen Lautsprecher und ein Mikrofon auf.

Es ist Aufgabe der Erfindung, ein weiteres Anwendungsfeld für Mobiltelefone zu erschließen. Vorzugsweise soll dies mit geringem Zusatzaufwand geleistet werden, so daß insgesamt eine möglichst kostengünstige und dabei attraktive Lösung realisiert werden kann.

Erfindungsgemäß wird diese Aufgabe durch ein Mobiltelefon mit den Merkmalen des Anspruchs 1 und durch ein Verfahren zur Wiedergabe von Audiodaten mit den Merkmalen des Anspruchs 10 gelöst. Die abhängigen Ansprüche betreffen bevorzugte Weiterentwicklungen der Erfindung.

Die Erfindung beruht auf der Grundidee, das Mobiltelefon mit einem Dekoder zur Wiedergabe von digitalen Audiodaten auszustatten, wobei die Audiodaten in einem komprimierten digitalen Audioformat, das sich von dem/den beim Telefoniebetrieb des Mobiltelefons eingesetzten Audioformat/en unterscheidet, vorliegen. Mit anderen Worten weist das erfindungsgemäße Mobiltelefon neben dem/den für den Telefoniebetrieb benötigten Dekoder/n noch mindestens einen zusätzlichen Dekoder speziell für das komprimierte digitale Audioformat auf. Dieser zusätzliche Dekoder kann wahlweise durch eine Hardwareschaltung oder durch ein Softwareprogramm oder als Mischform von Hard- und Software implementiert sein.

Durch die Erfindung wird das Mobiltelefon auch als Abspielgerät für das komprimierte digitale Audioformat nutzbar. Dabei eröffnet die Erfindung erhebliche Kombinations- und Synergiemöglichkeiten. So ist beispielsweise in bevorzugten Ausführungsformen der Erfindung vorgesehen, die Anzeige und/oder die Tastatur des Mobiltelefons sowohl im Telefoniemodus als auch im Audiowiedergabemodus einzusetzen. Ebenso ist bevorzugt eine gemeinsame Nutzung des Lautsprechers und/oder eines Audioausgangsanschlusses des Mobiltelefons (z.B. ausgestaltet als Kopfhöreranschluß und/oder als Vorverstärkerausgang zum Anschluß an den Verstärker eines Autoradios oder einer Car-HiFi-Anlage) vorgesehen. Auch die Stromversorgung aller Komponenten des Mobiltelefons erfolgt vorzugsweise durch einen gemeinsamen Akkumulator.

Das Mobiltelefon weist in bevorzugten Weiterbildungen eine fest eingebaute oder steckbare Speichereinheit zum Speichern der Audiodaten auf. In manchen Ausgestaltungen der Erfindung wird diese Speichereinheit auch für den Telefoniebetrieb, beispielsweise als Datenspeicher, verwendet.

Ferner ist in Weiterbildungen der Erfindung mindestens eine Digitalschnittstelle zum Ein- und/oder Auslesen von digitalen Audiodaten vorgesehen. Diese digitalen Audiodaten können in dem komprimierten digitalen Audioformat des Dekoders oder in einem anderen Format (beispielsweise unkomprimiert oder auf andere Weise komprimiert oder auf Basis des komprimierten digitalen Audioformats nochmals kodiert) ein- und ausgelesen werden. Die Digitalschnittstelle kann zum Anschluß einer Speichereinheit oder Speicherkarte oder eines externen Geräts vorgesehen sein. In Ausführungsvarianten ist die Digitalschnittstelle eine USB-Schnittstelle oder eine Infrarotschnittstelle oder eine Bluetooth-Schnittstelle. Über solche Schnittstellen können Daten mit einem Computer oder einem anderen externen Gerät (z.B. einem digitalen Aufnahme- und/oder Abspielgerät oder einem weiteren Mobiltelefon oder einem öffentlich aufgestellten Automaten) ausgetauscht werden.

Zum Einspeichern der digitalen Audiodaten ist das Mobiltelefon vorzugsweise dazu eingerichtet, eine von dem Benutzer ausgewählte Audiodatei von einem Dienstanbieter abzurufen und über einen Datenübertragungsweg in das Mobiltelefon zu übertragen. Der Datenübertragungsweg kann ein von dem zellulären Mobilfunknetz bereitgestellter Funk-Datenübertragungsweg oder ein Funk-Datenübertragungsweg kurzer Reichweite (z.B. gemäß dem Bluetooth-Verfahren) oder ein leitungsgebundener Datenübertragungsweg sein.

Vor der Übertragung von Audiodaten in das Mobiltelefon können dem Benutzer Informationen über eine Auswahl zur Verfügung stehender Audiodateien angezeigt werden. Die über den Datenübertragungsweg empfangenen Daten, die vorzugsweise in dem komprimierten digitalen Audioformat kodiert sind, können vom Mobiltelefon wahlweise in einer internen oder eingesteckten Speichereinheit gespeichert und/oder über eine interne oder externe Digitalschnittstelle ausgegeben und/oder direkt wiedergegeben werden.

Das Mobiltelefon ist in bevorzugten Ausführungsformen zur Kommunikation gemäß dem sogenannten "Wireless Application Protocol" (WAP) ausgestaltet. Dies betrifft die Anzeige der bei einem WAP-Dienstanbieter zur Verfügung stehenden Audiodateien oder Audiotitel und/oder den Dateiübertragungsvorgang (download) mittels WAP-Diensten und/oder die Bezahlung für die heruntergeladenen Daten über WAP-Dienste (z.B. WAP-Cash). Insgesamt ergibt sich durch die Integration in WAP eine als "WAP-Audio" bezeichnete Lösung.

In bevorzugten Ausführungsformen wird bei dem Mobiltelefon die Möglichkeit eines eingehenden Anrufs während der Audiowiedergabe berücksichtigt. Dazu wird vorzugsweise, wenn der Benutzer den Anruf annimmt, die Audiowiedergabe für die Dauer des Anrufs unterbrochen und nach Beendigung des Anrufs wieder fortgesetzt.

Das erfindungsgemäße Verfahren ist bevorzugt mit Merkmalen weitergebildet, die den im bisherigen Text oder den Vorrichtungsansprüchen beschriebenen Merkmalen entsprechen.

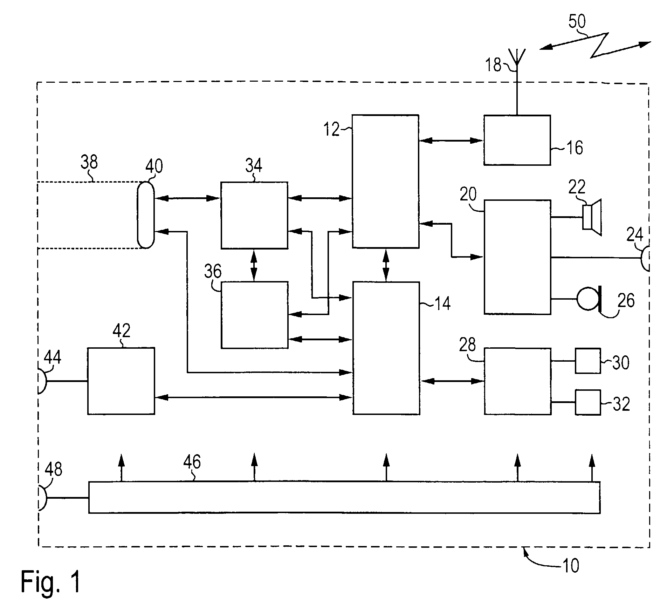

Ein Ausführungsbeispiel der Erfindung und mehrere Ausführungsalternativen werden im folgenden unter Hinweis auf die schematische Zeichnung beschrieben. Die einzige Zeichnungsfigur (Fig.1) stellt ein Blockschaltbild des erfindungsgemäßen Mobiltelefons dar.

Das in Fig. 1 schematisch gezeigte Mobiltelefon 10 weist als zentrale Verarbeitungskomponenten einen digitalen Signalprozessor (DSP) 12 und eine damit verbundene Mikroprozessor-Steuereinheit (MCU) 14 auf. Eine Hochfrequenzeinheit 16 ist an den DSP 12 und an eine Antenne 18 angeschlossen. Der DSP 12 ist ferner mit einer Niederfrequenzeinheit 20 verbunden, die ihrerseits an einen Lautsprecher 22, einen hier als Kopfhörerausgang 24 ausgebildeten Audioausgang und ein Mikrofon 26 angeschlossen ist. In Ausführungsvarianten weist das Mobiltelefon 10 zusätzlich oder alternativ einen Audioausgang zum Anschluß an einen stationären oder mobilen Verstärker auf.

Die MCU 14 vermag über eine Treibereinheit 28 Eingabedaten von einer Tastatur 30 zu empfangen und Anzeigedaten auf einer Anzeige 32, beispielsweise einem graphischen LCD-Display, darzustellen. Sowohl der DSP 12 als auch die MCU 14 stehen mit einer fest eingebauten Speichereinheit 34 in Verbindung. Die fest eingebaute Speichereinheit 34 enthält einen beispielsweise als ROM (read only memory) oder FLASH-Speicher ausgestalteten Programmspeicherbereich mit geeigneten Steuerprogrammen für den DSP 12 und die MCU 14 sowie einen beispielsweise als RAM (random access memory) ausgestalteten Arbeitsspeicherbereich und weitere Speicherbereiche.

Die bisher beschriebenen Komponenten des Mobiltelefons 10 sind an sich bekannt. Bei dem vorliegenden Ausführungsbeispiel der Erfindung ist zusätzlich ein Dekoder 36 vorgesehen, der mit der fest eingebauten Speichereinheit 34 sowie dem DSP 12 und der MCU 14 in Kontakt steht. Der Dekoder 36 dient zur Dekodierung eines komprimierten digitalen Audioformats, das für den eigentlichen Telefoniebetrieb des Mobiltelefons 10 nicht benötigt werden würde.

Ferner ist bei dem hier beschriebenen Ausführungsbeispiel ein Steckplatz für eine einsteckbare Speichereinheit 38 vorgesehen, beispielsweise für eine Chipkarte, eine Karte mit FLASH-Speicher oder ein unter der Bezeichnung "Memory Stick" bekanntes Speichermodul. Die einsteckbare Speichereinheit 38 steht über eine interne Digitalschnittstelle 40 mit der fest eingebauten Speichereinheit 34 und der MCU 14 in Verbindung. Die MCU 14 steuert ferner einen Schnittstellenbaustein 42 an, der eine externe Digitalschnittstelle 44, beispielsweise einen USB (universal serial bus) oder eine IrDA-Schnittstelle oder eine Bluetooth-Schnittstelle bereitstellt.

Alle beschriebenen Komponenten des Mobiltelefons 10 werden von einem gemeinsamen Akkumulator 46 mit Strom versorgt. Die benötigten Versorgungsleitungen sind in Fig. 1 aus Gründen der Übersichtlichkeit nur schematisch durch Pfeile dargestellt. Eine Ladebuchse 48 dient zum Anschluß des Akkumulators 46 an ein externes Ladegerät.

Hinsichtlich des reinen Telefoniebetriebs unterscheidet sich das Mobiltelefon 10 nicht von den im Stand der Technik bekannten Mobiltelefonen. Im hier beschriebenen Ausführungsbeispiel ist das Mobiltelefon 10 für den GSM-Standard (GSM = global system for mobile communication) eingerichtet. Das Mobiltelefon 10 sendet und empfängt Funksignale eines Mobiltelefonnetzes 50. Die von der Antenne 18 empfangenen Signale werden durch die Hochfrequenzeinheit 16 demoduliert und von dem DSP 12 in Sprachsignale umgesetzt, die ihrerseits über die Niederfrequenzeinheit 20 an den Lautsprecher 22 und/oder den Kopfhörerausgang 24 ausgegeben werden. Der DSP 12 wird dabei von einem in der Speichereinheit 34 enthaltenen Programm gesteuert. Der DSP 12 implementiert somit einen für den Telefoniebetrieb vorgesehenen Dekoder, der die in einem komprimierten digitalen Telefonieformat empfangenen Audiodaten dekodiert und umsetzt. Die Einzelheiten des komprimierten digitalen Telefonieformats sind durch den verwendeten Telefoniestandard (im vorliegenden Ausführungsbeispiel GSM) fest vorgegeben. Das komprimierte digitale Telefonieformat ist auf Sprachübertragung und eine relativ geringe Übertragungsqualität in Echtzeit ausgerichtet.

In ähnlicher Weise werden Sprachsignale von dem Mikrofon 26 über die Niederfrequenzeinheit 20 zum DSP 12 geleitet und dort mittels eines softwaremäßig durch den DSP 12 implementierten Kodierers in das komprimierte digitale Telefonieformat nach dem verwendeten Telefoniestandard umgesetzt. Die sich ergebenden Digitaldaten werden durch die Hochfrequenzeinheit 16 auf ein Trägersignal aufmoduliert und über die Antenne 18 an das Mobilfunknetz 50 gesendet.

Die gerade beschriebenen Telefoniefunktionen werden sämtlich von der MCU 14 gesteuert, die ihrerseits die Eingaben des Benutzers an der Tastatur 30 auswertet und die Informationen für den Benutzer über die Anzeige 32 ausgibt.

Der bei dem hier beschriebenen Ausführungsbeispiel zusätzlich vorgesehene Dekoder 36 dient ebenso wie der durch den DSP 12 softwaremäßig implementierte Dekoder zur Wiedergabe von Audiodaten, die jedoch nicht in dem Telefonieformat, sondern in einem davon unabhängigen Audioformat vorliegen. Dieses komprimierte digitale Audioformat ist ein für die Musikwiedergabe mit hoher Qualität optimiertes Format, beispielsweise das unter dem Namen MP3 bekannte Format oder eines der unter dem Namen Atrac3, AC3, MSAudio und realAudio bekannten Formate. Wegen der Optimierung des Audioformats zur Musikwiedergabe wird dieses Format im folgenden auch als "Musikformat" bezeichnet.

Im hier beschriebenen Ausführungsbeispiel ist der Dekoder 36 für das Musikformat als eigenständige integrierte Schaltung ausgestaltet, während der Dekoder für das Telefonieformat softwaremäßig durch den DSP 12 implementiert ist. In Ausführungsalternativen kann die Funktion des Dekoders 36 auch softwaremäßig durch den DSP 12 realisiert werden, so daß dann der DSP 12 zwei (oder mehr) unterschiedliche Dekoder nachbildet. Solche Ausgestaltungen sind besonders kostengünstig, weil keine zusätzliche integrierte Schaltung für den Dekoder 36 erforderlich ist. Alternativ oder zusätzlich kann auch der Telefoniedekoder als eigenständige integrierte Schaltung vorgesehen sein.

Die in dem komprimierten digitalen Audioformat vorliegenden Audiodaten können wahlweise in der fest eingebauten Speichereinheit 34 (und dort vorzugsweise im Arbeitsspeicher oder in einem speziell für Audiodaten vorgesehenen Speicherbereich), in der einsteckbaren Speichereinheit 38 oder in einem externen, über die Digitalschnittstelle 44 angeschlossenen Gerät (beispielsweise einem MP3-Spieler oder einen Computer) gespeichert sein.

Wenn der Benutzer die Audiodaten anhören möchte, wählt er mittels der Tastatur 30 in einem auf der Anzeige 32 dargestellten Menü einen Wiedergabebetriebsmodus des Mobiltelefons 10 aus. Dem Benutzer wird daraufhin eine Liste der Dateinamen oder Musikstückbezeichnungen sämtlicher Audiodateien angezeigt, die in den internen Speichereinheiten 34, 38 oder einem gegebenenfalls an die Digitalschnittstelle 44 angeschlossenen Gerät gespeichert sind. Wahlweise kann der Benutzer auch zunächst aufgefordert werden, eine dieser Speichereinheiten 34, 38 bzw. das externe Gerät anzuwählen.

Sobald der Benutzer mittels der Tastatur 30 die gewünschte Audiodatei oder das gewünschte Musikstück ausgewählt hat, beginnt die Wiedergabe über den internen Lautsprecher 22 des Mobiltelefons 10 oder einen an den Kopfhörerausgang 24 angeschlossenen Kopfhörer oder einen angeschlossenen Verstärker. Dabei werden die Audiodaten aus dem Speicher abgerufen und entweder über die MCU 14 oder unmittelbar in den Dekoder 36 eingespeist. Die dekodierten Signale werden über den DSP 12 und die Niederfrequenzeinheit 20 als Tonsignale ausgegeben. Der Wiedergabevorgang kann über die Tastatur 30 in einer ähnlichen Weise wie bei bekannten MP3-Spielern gesteuert werden.

Falls während der Audiowiedergabe ein Telefonanruf eingeht, wird dies dem Benutzer durch ein Anklopfzeichen signalisiert. Der Benutzer kann durch einen Tastendruck das Gespräch annehmen oder ablehnen. Im erstgenannten Fall wird die Audiowiedergabe für die Dauer des Gesprächs unterbrochen und nach Beendigung des Gesprächs an der Unterbrechungsstelle fortgesetzt.

Die zum Abspielen bereitstehenden digitalen Audiodaten können vom Benutzer aus anderen Quellen (beispielsweise dem Internet) in den an die Digitalschnittstelle 44 angeschlossenen MP3-Spieler oder (mittels eines geeigneten externen Schreibgeräts) in die eingesteckte Speichereinheit 38 geschrieben werden. Außerdem kann eine Datenquelle (beispielsweise ein mit dem Internet verbundener Computer oder ein öffentlich aufgestellter Automat) per Kabel oder Infrarot-Verbindung oder Funk-Verbindung kurzer Reichweite an die Digitalschnittstelle 44 angeschlossen werden. Die von dieser Datenquelle gelieferten digitalen Audiodaten werden dann, unter Steuerung der MCU 14 und je nach den Eingaben des Benutzers an der Tastatur 30, in die fest eingebaute Speichereinheit 34 oder die eingesteckte Speichereinheit 38 geschrieben. Dabei können die Audiodaten über die Digitalschnittstelle 44 in dem komprimierten Audioformat oder in einem anderen Format ausgetauscht werden. Alle diese Vorgänge erfolgen interaktiv und werden vom Benutzer über die Tastatur 30 gesteuert und auf der Anzeige 32 angezeigt.

In dem hier vorliegenden Ausführungsbeispiel ist zusätzlich die Möglichkeit vorgesehen, die Audiodaten über einen Datenübertragungsweg von einem Dienstanbieter zu laden. Als Datenübertragungsweg wird hier ein gemäß dem eingesetzten Telefoniestandard vorgesehenes Funk-Übertragungsverfahren in dem Mobiltelefonnetz 50 verwendet, das verbindungslos oder verbindungsorientiert sein kann. In Ausführungsvarianten sind alternativ und zusätzlich andere Datenübertragungswege möglich, beispielsweise Datenübertragungswege kurzer Reichweite, die per Funk (z.B. nach dem Bluetooth-Standard) oder leitungsgebunden (z.B. über den USB) oder mittels Infrarot-Übertragung (z.B. mittels IrDA) arbeiten können.

Im vorliegenden Ausführungsbeispiel ist ein verbindungsorientierter Funk-Datenübertragungsweg gemäß dem Telefoniestandard des Mobiltelefonnetzes 50 vorge-sehen. Durch das Anwählen einer Servicenummer eines Dienstanbieters wird übei das Mobilfunknetz 50 eine Verbindung zu dem durch die Servicenummer angegebenen Audiodatei-Server aufgebaut. Der Server übermittelt zunächst an das Mobil telefon 10 eine Auswahl der zur Verfügung stehenden Audiodateien oder Musikstückbezeichnungen. Zu diesem Zweck kann das WAP-Protokoll auf Seiten des Servers und des Mobiltelefons 10 verwendet werden.

Die Auswahl der verfügbaren Titel wird auf der Anzeige 32 angezeigt, und der Benutzer wählt mittels der Tastatur 30 einen oder mehrere Titel aus. Die ausgewählten Audiodaten werden über den Datenübertragungsweg vom Server zum Mobiltelefon 10 übertragen und in einem Speicher abgelegt. Auch hierfür kann das WAP-Protokoll eingesetzt werden. Der genannte Speicher kann die interne Speichereinheit 34 oder die einsteckbare Speichereinheit 38 oder ein externes an die Digitalschnittstelle 44 angeschlossenes Gerät sein, wobei die Auswahl des Speichers entweder durch den Benutzer mittels der Tastatur 30 oder automatisch nach einer vorgegebenen Prioritätsliste erfolgt.

Zur Auswahl der Audiodatei ist neben der Titelanzeige auch eine Suchfunktion vorgesehen, bei der ein alphanumerischer Suchbegriff über die Tastatur 30 durch ein- oder mehrmaliges Betätigen der Zifferntasten eingegeben werden kann. Falls eine Benutzeridentifizierung mittels eines Benutzernamens erfolgt, können überdies Benutzerpräferenzen eingestellt und gespeichert werden. Der Benutzername kann auch in der angewählten Servicenummer codiert sein. In diesem Fall muß für jeden Benutzer eine eigene Servicenummer vergeben werden.

Wenn in Ausführungsvarianten ist alternativ oder zusätzlich ein Datenübertragungsweg kurzer Reichweite vorgesehen ist, kann dieser verwendet werden, um Audiodaten von einem öffentlichen Automaten in das Mobiltelefon 10 zu laden. Das Verfahren und die Bedienungsweise entsprechen dem oben beschriebenen Verfahren und der oben beschriebenen Bedienungsweise. Der Automat kann auch eigene Bedienungs- und Anzeigeelemente aufweisen, beispielsweise einen großen Bildschirm zum komfortablen Anzeigen der Auswahlliste.

Das gespeicherte Musikstück kann sofort nach Beendigung oder auch schon während des Übertragungsvorgangs auf die bereits beschriebene Weise abgehört werden. Bei einer hinreichenden Datenübertragungsrate des Datenübertragungs-wegs kann die Wiedergabe des Musikstücks gleichzeitig mit dem Beginn des Herunterladens (download) erfolgen; andernfalls wird zunächst ein Teil des Musikstücks geladen, bevor die Wiedergabe begonnen werden kann.

Die Abrechnung für die heruntergeladenen Musikdateien erfolgt wahlweise über ein Benutzerkonto (dann müssen Benutzername und Kennwort angegeben werden) oder unmittelbar über die Telefongebühren einer angewählten Servicenummer oder über WAP-Dienste (z.B. WAP-Cash oder D2-Cash) oder über die SIM-Karte des Mobiltelefons 10 (Abbuchung auf der Mobiltelefonrechnung) oder über eine vom Benutzer eingegebene Kreditkartennummer oder, bei einem Automaten, per Bargeld. Es sind auch Ausführungsformen vorgesehen, bei denen zur Abrechnung und zum Herunterladen der Audiodaten unterschiedliche Datenübertragungswege verwendet werden. So können beispielsweise die Audiodaten von dem Automaten per Infrarot-Schnittstelle geladen werden, während die Abrechnung durch das Anwählen einer Servicenummer über das Mobiltelefonnetz 50 oder über einen WAP-Dienst erfolgt.

## Patentansprüche

1. Mobiltelefon (10) mit einem Dekoder (36) zur Wiedergabe von Audiodaten, die in einem komprimierten digitalen Audioformat, das sich von dem/den beim Telefoniebetrieb des Mobiltelefons verwendeten Audioformat/en unterscheidet, gespeichert sind.

2. Mobiltelefon (10) nach Anspruch 1,
dadurch gekennzeichnet, daß eine Anzeige (32) und eine Tastatur (30) des Mobiltelefons (10) sowohl zur Bedienung des Mobiltelefons (10) für den Telefoniebetrieb als auch zur Auswahl einer Audiodatei aus mehreren zur Verfügung stehenden Audiodateien und/oder zur Steuerung der Wiedergabe der Audiodatei vorgesehen sind.

3. Mobiltelefon (10) nach Anspruch 2,
dadurch gekennzeichnet, daß das Mobiltelefon (10) dazu eingerichtet ist, von einem Dienstanbieter Informationen über eine Auswahl zur Verfügung stehender Audiodateien abzurufen und auf der Anzeige (32) anzuzeigen, und daß das Mobiltelefon (10) vorzugsweise ferner dazu eingerichtet ist, eine von dem Benutzer ausgewählte Audiodatei von dem Dienstanbieter abzurufen und über einen Funk-Datenübertragungsweg oder einen Infrarot-Datenübertragungsweg in das Mobiltelefon (10) zu übertragen.

4. Mobiltelefon (10) nach einem der Ansprüche 1 bis 3,
dadurch gekennzeichnet, daß das Mobiltelefon (10) einen Lautsprecher (22) und/oder einen Audioausgangsanschluß aufweist, die/der sowohl zur Verwendung beim Telefoniebetrieb als auch zur Wiedergabe der Audiodaten vorgesehen sind/ist, und daß das Mobiltelefon (20) vorzugsweise ferner dazu eingerichtet ist, bei einem ankommenden Anruf während einer laufenden Audiowiedergabe den Anruf zu signalisieren und, wenn der Benutzer den Anruf annimmt, die Audiowiedergabe für die Dauer des Anrufs zu unterbrechen.

5. Mobiltelefon (10) nach einem der Ansprüche 1 bis 4,
dadurch gekennzeichnet, daß das Mobiltelefon (10) eine fest eingebaute oder einsteckbare Speichereinheit (34, 38) zum Speichern der Audiodaten in dem komprimierten digitalen Audioformat aufweist.

6. Mobiltelefon (10) nach einem der Ansprüche 1 bis 5,
dadurch gekennzeichnet, daß das Mobiltelefon (10) mindestens eine Digitalschnittstelle (40, 44) zum Ein- und/oder Auslesen von digitalen Audiodaten aufweist.

7. Mobiltelefon (10) nach Anspruch 6,
dadurch gekennzeichnet, daß die Digitalschnittstelle (40) an einen Steckplatz zum Anstecken einer digitalen Speichereinheit (38), insbesondere einer FLASH-Karte oder eines Memory-Sticks, geführt ist, oder daß die Digitalschnittstelle (44) eine Schnittstelle zum Anschluß eines externen Geräts, insbesondere eine USB-Schnittstelle oder eine Infrarotschnittstelle oder eine Bluetooth-Schnittstelle ist.

8. Mobiltelefon (10) nach einem der Ansprüche 1 bis 7,
dadurch gekennzeichnet, daß das Mobiltelefon (10) dazu eingerichtet ist, digitale Audiodaten über einen Datenübertragungsweg zu empfangen und in der Speichereinheit (34, 38) zu speichern und/oder über die Digitalschnittstelle (40, 44) auszugeben und/oder direkt wiederzugeben.

9. Mobiltelefon (10) nach einem der Ansprüche 1 bis 8,
dadurch gekennzeichnet, daß das komprimierte digitale Audioformat zur Speicherung von Musikstücken optimiert ist und insbesondere eines der Formate MP3, Atrac3, AC3, MSAudio und realAudio ist.

10. Verfahren zur Wiedergabe von Audiodaten durch ein Mobiltelefon (10), insbesondere ein Mobiltelefon (10) nach einem der Ansprüche 1 bis 9, mit den Schritten:
a) Aufbauen eines Datenübertragungsweges zur einem Dienstanbieter,
b) Auswählen einer Audiodatei aus einer Vielzahl von Audiodateien, die von dem Dienstanbieter angeboten werden,
c) Übertragen der ausgewählten Audiodatei über den Datenübertragungsweg zu dem Mobiltelefon (10),
d) Speichern der Audiodatei in einem komprimierten digitalen Audioformat, das sich von dem/den beim Telefoniebetrieb des Mobiltelefons verwendeten Audioformat/en unterscheidet, in einer Speichereinheit (34, 38) des Mobiltelefons (10), und
e) Wiedergabe der in der Speichereinheit (34, 38) gespeicherten Audiodatei mittels eines Dekoders (36) des Mobiltelefons (10).
